# EUROPEAN PATENT APPLICATION

(11) **EP 3 884 781 A1**
(43) Date of publication of application: **29.09.2021**
(21) Application number: 20315070.1
(22) Date of filing: 27.03.2020
(51) Int. Cl.: A21D 10/02, A21D 13/10, A21D 13/41, B65D 85/36

(54) **DOUGH PRODUCT AND RELATED METHODS**

(71) Applicant: Lesaffre et Compagnie, 75001 Paris (FR)
(72) Inventor: Billiet, Charles-Edouard, 59116 Houplines (FR); Bryckaert, Emilie, 59118 Wambrechies (FR); Meillier, Stéphane, 59223 Roncq (FR); Muchembled, Jean-Jacques, 59700 Marcq-en-Baroeul (FR)
(74) Representative: Bandpay & Greuter

(57) **Abstract**

The present invention belongs to the field of food processing and human nutrition. It particularly relates to a dough product comprising ready-to-use, stacked fresh dough pieces separated by barrier interfaces; a dough assembly comprising said dough product; a method for preparing them and a method for storing them. The dough product has a prolonged lifetime, without compromising the organoleptic properties of the dough pieces. The dough product is useful for example for preparing home-delivered dough-based foodstuff, particularly pizzas.

## Description

### TECHNICAL FIELD

The present invention belongs to the field of food processing and human nutrition. The present invention particularly relates to a dough product comprising ready-to-use, fresh dough pieces; a dough assembly comprising said dough product; a method for preparing them and a method for storing them. The dough product has a prolonged lifetime, without compromising the organoleptic properties of the dough pieces. The dough product is useful for example for preparing home-delivered dough-based foodstuff, particularly pizzas.

### TECHNICAL BACKGROUND

Dough-based foodstuff has become immensely popular over the past decades. For example, people frequently eat pizzas, as they are easy to bake, they have an appealable taste, and many different recipes are available.

The preparation of fresh dough, however, requires some attention, as its lifetime is limited to a couple of days at refrigeration temperature and its organoleptic properties deteriorate quickly. The organoleptic properties include textural properties, culinary properties, baking properties, viscoelastic properties, etc. The extemporaneous preparation of fresh dough is therefore cumbersome and time-consuming, particularly for businesses such as restaurants and delivery and carryout shops, where a very high number of dough pieces is needed every day.

Over the years, different solutions have been developed for facilitating the preparation and the storage of dough-based foodstuff.

For example, ready-to-bake dough-based foodstuff are sold at retail shops. The lifetime of such products varies depending on the type of preservation. For example, frozen ready-to-bake topped pizzas may be stored for weeks, or even months, at freezing temperature. In contrast, vacuum-packaged, fresh ready-to-bake topped pizzas may be stored only for a few days and usually are supplemented with food preservatives. However, these dough-based products do not always match the quality (taste, texture, crispiness, etc.) of pizzas prepared and baked upon demand.

Hence, consumers are still keen on eating pizzas at restaurants or at ordering home-delivered pizzas. In order to meet the demand and to sell pizzas at reasonable prices, pizza makers, particularly at chain stores, often use ready-to-use, premade fresh dough pieces, which are prepared in advance and stored for a few days. For example, ready-to-use, premade fresh dough pieces may be prepared at a food processing facility, before being delivered and stored at the stores until use. Such dough pieces are usually not frozen. Hence, upon demand, the pizza maker just needs to top the dough and to bake the pizza. The same applies to other dough-based foodstuff such as bread and pastry.

Conventionally, a dough composition is prepared and cut into dough pieces of suitable size and weight, which are placed apart from each other, for example in a staggered arrangement, on stackable trays, directly at the food processing facility. Usually, a baking paper is placed on the tray, before placing the dough pieces. Several trays are delivered together to the stores, stacked on each other and stored at refrigeration temperature, until further use. Weekly deliveries are usual so as to facilitate logistics and avoid shortages in material in case of high demand. Hence, the dough pieces may be stored up to six days. Even though this practice allows having ready-to-use, fresh dough pieces, without needing to prepare them extemporaneously every day or to freeze them, there are several drawbacks. Firstly, a large refrigeration capacity is necessary for storing a high number of dough pieces for several days. Secondly, the organoleptic properties of the dough pieces deteriorate as time passes. As a consequence, the quality and the homogeneity of the dough-based foodstuff vary depending on the storage time. Thirdly, yeast fermentation may continue, and the dough pieces may keep expanding and/or spreading on the tray. Fourthly, the pizza maker may have difficulties working with dough pieces as they become soggy and sticky or alternatively hard and dry over time. They may also have an irregular shape. Hence, dough pieces are usually no longer acceptable after three days and/or they need to be worked by a skilled pizza maker. Fifthly, unused dough pieces should be thrown away after a few days. This generates unnecessary waste and loss of money.

There is therefore a need for providing ready-to-use, fresh dough pieces having a prolonged storage lifetime, without deteriorating their organoleptic properties, while maintaining the processability of the dough pieces. There is also the need for reducing the refrigeration storage capacity in stores. There is also the need for facilitating logistics by having longer intervals between two deliveries. There is also the need for limiting the quantity of dough pieces being thrown away, and the cost associated therewith.

### SUMMARY OF THE INVENTION

It is a first object of the invention to provide a dough product comprising at least five ready-to-use, fresh dough pieces, barrier interfaces and a flexible packaging; wherein the dough pieces are stacked on top of each other and separated by barrier interfaces; and wherein the stacked dough pieces are packaged together in the flexible packaging.

In one embodiment, the dough product comprises from eight to twelve, preferably ten, dough pieces per packaging.

In one embodiment, the dough pieces are selected from the group consisting of pieces of bread dough, pizza dough, biscuit dough, cake dough, cookie dough, pastry dough or pasta dough; preferably from the group consisting of pieces of bread dough or pizza dough; more preferably wherein the dough pieces are pieces of pizza dough.

In one embodiment, the dough pieces are obtained from a dough composition comprising flour, a leavening living agent and water.

In one embodiment, the material, from which the barrier interface is made, is selected from plastics, silicone or cooking papers; preferably wherein this material is a cooking paper.

In one embodiment, at least one dough product as defined herewith is stored in a rigid packaging.

It is a second object of the invention to provide a method for preparing the dough product as defined herewith, comprising the steps of: providing a dough composition and preparing fresh dough pieces; providing barrier interfaces; placing a first dough piece on a first barrier interface; placing a barrier interface on top of the first dough piece; sequentially and alternatively placing additional dough pieces and barrier interfaces; and, wrapping the stacked dough pieces with a flexible packaging.

It is a third object of the invention to provide a method for storing ready-to-use, fresh dough pieces, comprising the steps of: providing a dough product as defined herewith; and refrigerating the dough product.

The present invention makes it possible to address the needs of the prior art. In particular, the invention provides fresh dough pieces having a prolonged lifetime, for example up to fourteen days, without any significant deterioration of their organoleptic properties i.e. their textural properties, culinary properties, baking properties and/or viscoelastic properties. The invention also allows sizing down the refrigeration storage capacity in stores or/and allows storing a higher number of dough pieces. The invention also allows avoiding the use of stackable strays, the logistics of which (delivery, storage, return and cleaning) is cumbersome. Delivery and storage logistics are therefore simplified, in that delivery frequencies may be reduced, and dough products are handled more easily than with conventional trays.

The inventors have shown that, by stacking at least five, preferably eight to twelve, dough pieces on top of each other and packing tightly them together, the dough pieces have a prolonged lifetime. Indeed, by comparison with dough pieces placed apart from each other on stackable trays, packaged stacked dough pieces according to the present invention keep satisfactory organoleptic properties for many days, for example up to fourteen days. Indeed, after several days of storage, the dough pieces do not show excessive sogginess, stickiness, hardness and/or dryness. Likewise, they do not show excessive unwanted growth, and retain a regular shape. Without wishing to be bound by theory, it is believed that stacking a sufficient number of dough pieces and packaging them together limits the yeast fermentation and preserves organoleptic properties, thanks to the physical constraint obtained by the stacking and the packaging, together with a storage at refrigeration temperature.

### DESCRIPTION OF EMBODIMENTS

The invention will now be described in more detail without limitation in the following description.

### Dough product

In a first aspect, the present invention relates to a dough product comprising at least five ready-to-use, fresh dough pieces, barrier interfaces and a flexible packaging; wherein the dough pieces are stacked on top of each other and separated by barrier interfaces; and wherein the stacked dough pieces are packaged together in the flexible packaging.

### Dough pieces

The dough pieces according to the invention are pre-made, raw dough pieces, which are storage-stable pieces. They are ready-to-use *i.e.* ready to be baked. Prior baking, the dough pieces may be prepared *e.g.* filled and/or topped with any suitable garnish.

The dough pieces may be any dough pieces suitable for preparing dough-based foodstuff.

The dough pieces may be selected from the group consisting of pieces of bread dough, pizza dough, biscuit dough, cake dough, cookie dough, pastry dough or pasta dough; preferably from the group consisting of pieces of bread dough or pizza dough; more preferably the dough pieces are pieces of pizza dough.

### Dough composition

The dough product may be obtained from any suitable dough composition. The dough composition may be prepared by mixing flour, a leavening living agent and water. The dough may also comprise any suitable additional compounds. Suitable additional compounds may be selected from the group consisting of humecting agents, fatty compounds, sweetening agents, flavoring agents, improvers, deactivated yeast, or their mixtures. The proportions of the compounds are conventionally given per total weigh of the flour, also known as Baker's percentage.

The dough composition comprises any suitable flour, preferably wheat flour. For example, the flour may be from different grades, such as weak flour, medium strength flour and strong flour; preferably strong flour. By "strong flour" is meant a flour comprising a high protein content e.g. of about 14% by total weight of the flour. By "medium strength flour" is meant a flour comprising an intermediate protein content e.g. of about 10 % by total weight of the flour. By "weak flour" is meant a flour comprising a low protein content e.g. of about 8 % by total weight of the flour.

The dough composition comprises any suitable leavening living agent; preferably a leavening living agent being a living yeast. The dough composition may comprise from 0.1 to 5 %, preferably from 0.3 to 2 %, of leavening living agent, per weight of the flour.

The dough composition may comprise a humecting agent. The humectant agent may be selected from the group consisting in sodium chloride (salt) or its substitutes. The humectant agent helps binding water to the dough composition. The dough composition may comprise from 0.1 to 5 %, preferably from 1.5 to 2.5 %, of humectant, per weight of the flour.

The dough composition may comprise a fatty compound. Fatty compounds may be selected from the group consisting of fatty compounds from animal origin, vegetal fatty compounds or any suitable substitutes. The dough composition may comprise from 0.1 to 10 %, preferably from 0.5 to 3 %, of fatty compound, per weight of the flour.

The dough composition may comprise any suitable additional compounds such as improvers, deactivated yeasts (dead), etc. The dough composition may comprise an additional compound selected from the group consisting of glucono-delta-lactone (E475), diacetyl tartaric acid ester of mono- and diglycerides or DATEM (E472e), glucose oxidase (E1102) or mixtures thereof. In one embodiment, the dough composition is free of malted wheat flour.

### Leavening living agent

The dough composition may comprise only one strain of yeast or a mixture of at least two strains of yeast. The yeast may be selected from the group consisting of the genera *Saccharomyces, Pichia, Candida, Kluyveromyces, Yarrowia* and/or *Wickehomomyces;* preferably from the group consisting of the species *Saccharomyces cerevisiae, Pichia jadinii, Kluyveromyces marxianus.* More preferably, the yeast is *Saccharomyces cerevisiae spp.* particularly baker's yeast.

In a specific embodiment, the dough composition comprises a cold-sensitive yeast. By "cold-sensitive yeast" is meant a yeast having for example a reduced fermentation performance at a positive cold temperature i.e. at a temperature superior to 0 °C and up to 10 °C, preferably from 4 to 10 °C.Suitable cold-sensitive yeasts are disclosed for example in the PCT application WO 97/28693 A1 filed on February 7th, 1997 in the name of Lesaffre et Cie, which is incorporated herewith by reference. Suitable cold-sensitive yeasts may be yeasts giving at least 100 ml of CO₂ in two hours at 30 °C in the test A₁ according to WO 97/28693 A1, preferably at least 110 ml of CO₂, still preferably at least 150 ml CO₂ ; corresponding to the following ratio [release of CO₂ in 48 hours at 8 °C in test A₁ / release of CO₂ in 2 hours at 30 °C in test A₁] lower than 0.45, preferably lower than 0.40 and still preferably lower than 0.30; it being understood that according to test A₁, there is added to 20 g of flower incubated at the temperature selected for the measure a weight of compressed yeast corresponding to 160 mg of dry matter, the said yeast being diluted in 15 ml of water containing 27 g of NaCl per litre and 4 g of (NH₄)₂SO₄ per litre; this is mixed with a spatula during 40 seconds in order to obtain a dough which is put in a water-bath or bain-marie regulated at the selected temperature ; thirteen minutes after the start of the mixing, the vessel containing the dough is hermetically closed; the total amount of gas which is produced is measured after 60, then 120 minutes or several hours; that quantity being expressed in ml at 20°C and under 760 mm of Hg. Suitable cold-sensitive yeasts are commercially available under the tradenames T. CONTROL™ 4.10 from Lesaffre or LT3 from Oriental Yeast (OYC).

The dough composition may also comprise a conventional baker's yeast. In a preferred embodiment, the dough composition comprises a mixture of a cold-sensitive yeast and a conventional baker's yeast. The cold-sensitive yeast and the conventional baker's yeast may be present in a respective ratio from 1:10 to 10:1, preferably from 1:5 to 5:1, more preferably from 1:2 to 2:1, for example about 1:1. The inventors have shown that providing dough compositions comprising such mixture of yeasts is particularly suitable for providing dough pieces having a prolonged lifetime, for example up to fourteen days, without any significant deterioration of their organoleptic properties. Indeed, such dough compositions show a satisfactory balanced fermentation profile both at positive cold temperature - by helping to limit excessive unwanted growth and retaining a regular shape, particularly with the incorporation of cold-sensitive yeasts - and at ambient temperature - by satisfactorily fermenting the dough, particularly by incorporating conventional baker's yeast.

### Method for preparing the dough

The method for preparing the dough may comprise the steps of:
- providing a dough composition comprising at least flour, a leavening living agent and water;
- kneading and/or sheeting the mixture for obtaining a homogenous dough;
- optionally cutting the homogenous dough for obtaining dough pieces of suitable size and weight;
- forming a ball with the dough pieces; and
- letting the dough rest for obtaining a raised dough *e.g.* by yeast fermentation;
- flattening e.g. by pressing the raised dough for obtaining flattened dough pieces of suitable size;
- optionally covering the raised dough with flour and/or semolina;
- optionally refrigerating the raised dough to reduce its temperature.

The resting step may be carried out at a temperature from 18 to 25 °C, and between 15 min to 1 hour, for example at a temperature of 18 °C for 15 min or alternatively at a temperature of 25 °C for 1 h if some fermentative activity is wanted before the flattening (pressing) step.

The refrigerating step may be carried out at a temperature from about 0 °C to 2 °C during a period from 1 to 2 h, in order to reduce the temperature of the dough pieces up to about 4°C. In contrast, no freezing step is carried out.

After preparing the dough pieces, they may be shaped in order to obtain a substantially disk shape i.e. a circular (round) flat shape. For example, they may have a diameter from 22 to 24 cm for a weight of about 300 g.

The stacked dough pieces are not fitted into a mold.

### Barrier interface

The stacked dough pieces are separated by the barrier interface. The barrier interface may be made of any suitable food-contact materials. The material, from which the barrier interface is made, may be selected from plastics, silicone (e.g. Silpâte ®) or cooking papers; preferably the material is a cooking paper. In one embodiment, the barrier interface is made of a sustainable material, which can be reused or recycled afterwards.

A barrier interface may be placed below the first dough piece.

After placing the last dough piece, a barrier interface may be placed on top of it.

For example, the barrier interface may have a diameter from 22 to 24 cm. The diameter of the barrier interface is substantially identical to the diameter of the dough pieces, after the resting and the cooling steps.

### Packaging

The dough product further comprises a flexible packaging and/or a rigid packaging.

The packaging may be made of any suitable food-contact materials, particularly soft food-contact materials. The material may be a plastic material.

The packaging may be a sealed packaging. The packaging may allow some gas exchange.

The packaging may comprise both a flexible packaging such as a plastic bag fitted into a rigid packaging such as a cardboard box.

### Dough assembly

In a second aspect, the dough assembly comprises at least one dough product stored in a rigid packaging.

The rigid packaging may be any suitable packaging for storing at least one dough product, particularly in a tight manner.

The rigid packaging may be a parallelepiped box, preferably a cubic box, with dimensions matching the diameter of the dough pieces and the total height of the packaged, stacked dough pieces. The rigid packaging may be a sealable packaging or a packaging with a top open end. The rigid packaging may be a conventional card box.

### Method for preparing the dough product

In a third aspect, a method for preparing the dough product is provided. This method comprises the steps of:
- providing a dough composition and preparing fresh dough pieces;
- providing barrier interfaces;
- placing a first dough piece on a first barrier interface;
- placing a barrier interface on top of the first dough piece;
- sequentially and alternatively placing additional dough pieces and barrier interfaces; and,
- wrapping the stacked dough pieces with a flexible packaging.

### Method for storing readv-to-use, fresh dough pieces

In a fourth aspect, a method for storing ready-to-use, fresh dough pieces is provided.

This method comprises the steps of:
- providing a dough product as described herewith;
- refrigerating the dough product.

The dough product may be refrigerated at a temperature superior to 0 and up to 10 °C; preferably superior to 0 and up to to 8 °C; more preferably superior to 0 and up to 4 °C. At this temperature, the yeast becomes mostly inactive, hence limiting the fermentation of the dough piece upon storage. In contrast, the dough product is not frozen below about 0 °C.

The dough product may be stored up to 14 days. The present invention therefore allows prolonging the storage lifetime at least three times more than the conventional technique consisting in placing fresh dough pieces apart from each other directly on trays.

The dough pieces are never frozen, whatever during preparation, storage and delivery.

### Method for using the dough products

The dough products according to the present invention may be used as follows. The rigid packaging, if present, and the flexible packaging may be removed. One of the stacked dough pieces may be removed and placed on a flat surface. The dough piece may be sheeted to the suitable shape, diameter and thickness. If the dough is used for preparing a pizza, it may be topped with any garnish and then be baked at a suitable temperature and for a suitable period of time. Meanwhile the dough product may be stored again at refrigeration temperature or may be left at ambient temperature if the other stacked dough pieces are to be used within minutes.

### EXAMPLES

The following example illustrates the invention without limiting it.

A dough composition is prepared by mixing about 55 % of water, about 1.5 % of salt, about 2 % of oil, about 0.1 % of deactivated yeast, about 0.3 % of a cold-sensitive yeast, about 0.3 % of a conventional baker's yeast and about 1 % of improver by weight of the flour. The dough composition may be adapted depending on the user's wishes e.g. different grades of flour, addition of sugar, etc.

The dough composition is kneaded for 10 min to obtain a homogenous dough, then let resting for 15 min, then divided into dough pieces of about 300 g. The dough pieces are ball-shaped and let for resting at an ambient temperature for 15 min. The dough pieces are shaped again to obtain flat pieces having a diameter of about 22 to 24 cm. Raised dough pieces are stacked on top of each other by ten, with barrier interfaces in-between, and then refrigerating at 4 °C.

The dough pieces have been baked after different periods of refrigeration, for example after three and eleven days, without noticing any significant difference in terms of baking.

## Claims

1. A dough product comprising at least five ready-to-use, fresh dough pieces, barrier interfaces and a flexible packaging;
wherein the dough pieces are stacked on top of each other and separated by barrier interfaces; and
wherein the stacked dough pieces are packaged together in the flexible packaging.

2. The dough product according to any one of the preceding claims, comprising from eight to twelve, preferably ten, dough pieces per packaging.

3. The dough product according to any one of the preceding claims, wherein the dough pieces are selected from the group consisting of pieces of bread dough, pizza dough, biscuit dough, cake dough, cookie dough, pastry dough or pasta dough; preferably from the group consisting of pieces of bread dough or pizza dough; more preferably wherein the dough pieces are pieces of pizza dough.

4. The dough product according to any one of the preceding claims, wherein the dough pieces are obtained from a dough composition comprising flour, a leavening living agent and water.

5. A dough product according to any one of the preceding claims, wherein the material, from which the barrier interface is made, is selected from plastics, silicone or cooking papers; preferably wherein this material is a cooking paper.

6. A dough assembly comprising at least one dough product according to any preceding claims stored in a rigid packaging.

7. A method for preparing the dough product according to any one of the claims 1 to 6, comprising the steps of:
- providing a dough composition and preparing fresh dough pieces;
- providing barrier interfaces;
- placing a first dough piece on a first barrier interface;
- placing a barrier interface on top of the first dough piece;
- sequentially and alternatively placing additional dough pieces and barrier interfaces; and,
- wrapping the stacked dough pieces with a flexible packaging.

8. A method for storing ready-to-use, fresh dough pieces, comprising the steps of:
- providing a dough product according to any one of claims 1 to 6; and
- refrigerating the dough product.
